(19) Europäisches Patentamt
European Patent Office
Office européen des brevets

(11) **EP 3 137 987 B1**

(12) **EUROPEAN PATENT SPECIFICATION**

(45) Date of publication and mention of the grant of the patent:
**01.01.2020 Bulletin 2020/01**

(51) Int Cl.:
*G06F 7/00* (2006.01)    *G06F 16/2453* (2019.01)

(21) Application number: **16764237.0**

(86) International application number:
**PCT/CN2016/076377**

(22) Date of filing: **15.03.2016**

(87) International publication number:
**WO 2016/146057 (22.09.2016 Gazette 2016/38)**

(54) **A METHOD AND A PLAN OPTIMIZING APPARATUS FOR OPTIMIZING QUERY EXECUTION PLAN**

VERFAHREN UND PLANOPTIMIERUNGSVORRICHTUNG ZUR OPTIMIERUNG EINES ABFRAGEAUSFÜHRUNGSPLANES

PROCÉDÉ ET APPAREIL D'OPTIMISATION DE PLAN PERMETTANT D'OPTIMISER UN PLAN D'EXÉCUTION DE REQUÊTES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.03.2015 IN 1300CH2015**

(43) Date of publication of application:
**08.03.2017 Bulletin 2017/10**

(73) Proprietor: **Huawei Technologies Co. Ltd.
Shenzhen, Guangdong 518129 (CN)**

(72) Inventors:
• **KUMAR, Dilip
Guangdong 518129 (CN)**
• **RASTOGI, Kumar Rajeev
Guangdong 518129 (CN)**
• **RAMAMURTHI, Prasanna Venkatesh
Guangdong 518129 (CN)**

(74) Representative: **Pfenning, Meinig & Partner mbB
Patent- und Rechtsanwälte
Joachimsthaler Straße 10-12
10719 Berlin (DE)**

(56) References cited:
EP-A1- 1 986 108          US-A1- 2003 182 276
US-A1- 2004 158 551    US-A1- 2005 060 285
US-A1- 2005 097 078    US-A1- 2007 226 186
US-A1- 2008 104 014    US-A1- 2009 259 644
US-A1- 2014 046 928

• **Sybase: "Performance and Tuning Series: Query Processing and Abstract Plans", , 1 November 2008 (2008-11-01), XP055360961, Retrieved from the Internet: URL:http://infocenter.sybase.com/help/topi c/com.sybase.infocenter.dc00743.1502/pdf/q ueryprocessing.pdf [retrieved on 2017-03-31]**
• **ARUN SWAMI ET AL: "Optimization of large join queries", MANAGEMENT OF DATA, ACM, 2 PENN PLAZA, SUITE 701 NEW YORK NY 10121-0701 USA, 1 June 1988 (1988-06-01), pages 8-17, XP058097886, DOI: 10.1145/50202.50203 ISBN: 978-0-89791-268-6**

**Description**

**TECHNICAL FIELD**

The present disclosure relates to the field of database, and in particular, to a method and a plan optimizing apparatus for optimizing query execution plans.

**BACKGROUND**

Generally, a Structured Query Language (SQL) is a kind of database query and programming language. A SQL statement inputted by a user is executed on a Relational Database Management System (RDBMS) database using an executor. The executor, in general, can execute wide range of queries which comprises, without limitations, join operations, grouping operations, trigger operations, functional execution in qualifications etc. The executor comprises a plurality of query execution plans using which the SQL statement is executed. Typically, each of the plurality of query execution plans comprises a planning time and an execution time. The planning time refers to a time required for planning or creating a query execution plan for executing the SQL statement. The execution time is a time required for executing the query execution plan towards the SQL statement. Based on the planning time and/or the execution time, the executor chooses a best plan among the plurality of query execution plans for executing the SQL statement.

In conventional approach, sometimes planning time and/or the execution time of the chosen query execution plan are huge. Particularly, the planning time required to create the query execution plan to execute the SQL statement having more number of join operations requires more time and involves complexity. In such a case, the execution process has to wait till the query execution plan is planned or created totally. In other words, the execution does not start until the query execution plan is created. Therefore, the execution of the SQL statement is prolonged because of waiting for the creation and execution of the query execution plan. Sometimes, the planning time can be more than the execution time to execute the query.

In another conventional approach, there exists a challenge to enhance the query execution plan while executing the query execution plan. For enhancing the query execution plan, there is a requirement to create the query execution plans from beginning which results in wastage of time and resources. Further, the creation of the query execution plan is always bound to planning time but is not bound to the execution time. For example, there is a challenge in creating or planning the query execution plan until the execution time reaches 'X'. Thus, the conventional approaches lack flexibility in planning the query execution plan.

US 2004/158551 A1 named "Patterned based query optimization" has proposed a method, a articles of manufacture, and systems for improving the efficiency of executing queries are provided. Rather than automatically running an optimizer to determine an access plan for each issued query, an access plan may be selected from a series of access plans used for prior executions of the same or a similar query. The series of access plans used for prior queries may define a pattern that may be used to accurately predict the behavior (e.g., execution time) of a future query. For some embodiments, a query group may be established to identify a set of similar queries, for which the optimizer is likely to determine the same access plans. In response to determining an issued query fits within an established query group, an access plan associated with the query group may be selected for executing the query, thus avoiding the processing overhead of wastefully running the optimizer only to determine a previously used access plan.

US 2008/104014 A1 named "Refreshing an execution plan for a query" has proposed an improved system and method for storing, reusing and recompiling execution plans for SQL database queries. The system validates the performance of a newly compiled plan prior to replacing a currently stored execution plan and compares the resource cost of the recompiled plan with the cost of the currently stored plan. In the event that the resource cost of the recompiled plan is not greater than the stored plan resource cost, the system replaces the currently stored execution plan with the recompiled plan.

US 6 707 724 B1 named "Parallel optimizer hints with a direct manipulation user interface" has proposed a method, apparatus, and article of manufacture for directly manipulating a query for a relational database management system (RDBMS). The query is transformed into an operator tree that is displayed on a monitor, wherein the operator tree includes nodes for data sources and operators referenced in the query, and lines between the nodes. The RDBMS alters an execution plan for the query in response to one or more manipulations made to the displayed operator tree by the user. Generally, these manipulations comprise hints for an optimizer function of the RDBMS that an efficient execution plan to be generated for the query. Specifically, the hints influence the optimizer to choose one execution plan over another when there is insufficient information for the optimizer function to make a choice on its own.

US 2005/060285 A1 named "Query optimization via a partitioned environment" has proposed a systems, methods, and articles of manufacture for improving the efficiency of executing a query are provided. Queries frequently issued in a primary processing environment (e.g., a primary logical partition) may be run in a background processing environment (e.g., a background logical partition) with different access plans to determine the access plan that results in the least execution time. For some embodiments, in an effort to avoid executing queries that may have an adverse system-wide impact, selected queries may be analyzed in the background processing environment prior to being executed. This analysis may be performed to ensure the execution time of the query will not exceed a specified threshold, and/or will not result in excessive contention when executed in the primary processing environment.

A paper named "Optimization of large join queries" in MANAGEMENT OF DATA, ACM, 2 PENN PLAZA, SUITE 701 has proposed to use a statistical techniques of factorial experiments and analysis of variance(ANOVA) to obtain reliable values for the parameters of these algorithms and to compare these algorithms.

## SUMMARY

The objective of the present disclosure is to manage planning time and/or execution time to manage execution of queries. Another objective of the present disclosure is to optimize the planning time and/or the execution time along with optimization of the query execution plan. The optimization is performed until an optimized query execution plan is generated depending on an optimized planning time and/or execution time.

The present disclosure relates to a method for optimizing query execution plan. The method comprises receiving optimizing parameters from a user device for optimizing a query execution plan, wherein the query execution plan is latest of one or more query execution plans for executing one or more queries , and wherein the optimizing parameters are received when duration of execution of the one or more queries using the query execution plan is greater than a predefined time period required for executing the one or more queries, wherein the optimizing parameters comprise a query statement, a planning time and a plan execution time, the query statement refers to a statement of the query execution plan, wherein an execution takes more duration at the statement than other statements of the query execution plan and generating an optimized query execution plan commencing from the query statement by iterating optimization of the query execution plan until the optimization satisfies the optimizing parameters.

In an embodiment, the query execution plan is stored in a memory associated to the plan optimizing apparatus. The method further comprises storing the optimized query execution plan as a latest plan in the memory of the plan optimizing apparatus for executing the one or more queries. In an embodiment, the one or more query execution plans are generated upon receiving a plan creation request from the user device. The plan creation request comprises at least one of a query statement, a query and the one or more optimizing parameters.

A plan optimizing apparatus is disclosed in the present disclosure for optimizing query execution plan. The plan optimizing apparatus comprises a receiving module, a plan optimizing module, a memory, a plan generating module and an update module. The receiving module is configured for receiving optimizing parameters from a user device for optimizing a query execution plan. The optimizing parameters comprise a query statement, a planning time and a plan execution time. The receiving module receives the optimizing parameters when duration of execution of the one or more queries using the query execution plan is greater than a predefined time period required for executing the one or more queries. The query execution plan is latest of one or more query execution plans for executing one or more queries, and wherein the optimizing parameters are received when duration of execution of the one or more queries using the query execution plan is greater than a predefined time period required for executing the one or more queries, wherein the optimizing parameters comprise a query statement, a planning time and a plan execution time, the query statement refers to a statement of the query execution plan, wherein an execution takes more duration at the statement than other statements of the query execution plan. The one or more query execution plans are generated by the plan generating module upon receiving a plan creation request from the user device. The plan creation request comprises a query statement, a query and the one or more optimizing parameters. The memory stores the query execution plan being received. The plan optimizing module is configured for generating an optimized query execution plan by iterating optimization of the query execution plan until the optimization satisfies the one or more optimizing parameters. The update module is configured for storing the optimized query execution plan as a latest plan in the memory of the plan optimizing apparatus for executing the one or more queries.

The present disclosure relates to a non-transitory computer readable medium including operations stored thereon that when processed by at least one processing unit cause a plan optimizing apparatus to perform one or more actions by performing the acts of receiving optimizing parameters from a user device for optimizing a query execution plan, wherein the query execution plan is latest of one or more query execution plans for executing one or more queries; and wherein the optimizing parameters are received when duration of execution of the one or more queries using the query execution plan is greater than a predefined time period required for executing the one or more queries, wherein the optimizing parameters comprise a query statement, a planning time and a plan execution time, the query statement refers to a statement of the query execution plan, wherein an execution takes more duration at the statement than other statements of the query execution plan and generating an optimized query execution plan commencing from the query statement by iterating optimization of the query execution plan until the optimization satisfies the optimizing parameters.

A computer program for performing one or more actions on a plan optimizing apparatus is disclosed by the present disclosure. The computer program comprises code segment for receiving one or more optimizing parameters from a user device for optimizing a query execution plan. The query execution plan is latest of one or more query execution plans for executing one or more queries. The optimizing parameters are received when duration of execution of the one or more queries using the query execution plan is greater than a predefined time period required for executing the one or more queries. The optimizing parameters comprise a query statement, a planning time and a plan execution time, the query statement refers to a statement of the query execution plan, wherein an execution takes more duration at the statement than other statements of the query execution plan. The computer program comprises code segment for generating an optimized query execution plan commencing from the query statement by iterating optimization of the query execution plan until the optimization satisfies the = optimizing parameters.

In an embodiment, the present disclosure provides advantage of optimizing the query execution plan including optimization of planning time and/or execution time. The present disclosure provides optimization of the query execution plan until the planning time and/or the execution time is satisfied. Particularly, the query execution plan which is currently in usage for executing the queries is further enhanced till the planning time and/or the execution time expires. In this way, there is no need to create a new plan from beginning and thus time is saved. Instead, an old plan itself is enhanced till a best query execution plan is generated. Thus, the time is not wasted in creating the query execution plan from beginning and also the best query execution plan is created to execute the queries quickly and efficiently without delay. Also, the present disclosure reduces the planning time and/or the execution time to reduce duration of the execution of the queries.

The foregoing summary is illustrative only and is not intended to be in any way limiting. In addition to the illustrative aspects and features described above, further aspects, and features will become apparent by reference to the drawings and the following detailed description.

## BRIEF DESCRIPTION OF THE DRAWINGS

The novel features and characteristic of the present disclosure are set forth in the appended claims. The embodiments of the present disclosure itself, however, as well as a preferred mode of use, further objectives and advantages thereof, will best be understood by reference to the following detailed description of an illustrative embodiment when read in conjunction with the accompanying drawings. One or more embodiments are now described, by way of example only, with reference to the accompanying drawings.

**Figures 1** shows an exemplary block diagram illustrating a plan optimizing apparatus with processor and memory in accordance with some embodiments of the present disclosure;

**Figure 2** shows exemplary block diagram illustrating a plan optimizing apparatus with various data and modules for optimizing query execution plan in accordance with some embodiments of the present disclosure;

**Figure 3** illustrates flowchart of method for optimizing query execution plan in accordance with some embodiments of the present disclosure; and

**Figure 4** illustrates a block diagram of an exemplary computer system for implementing embodiments consistent with the present disclosure.

The figures depict embodiments of the present disclosure for purposes of illustration only. One skilled in the art will readily recognize from the following description that alternative embodiments of the structures and methods illustrated herein may be employed without departing from the principles of the present disclosure described herein.

## DETAILED DESCRIPTION

The foregoing has broadly outlined the features and technical advantages of the present disclosure in order that the detailed description of the present disclosure that follows may be better understood. Additional features and advantages of the present disclosure will be described hereinafter which form the subject of the claims of the disclosure. It should be appreciated by those skilled in the art that the conception and specific aspect disclosed may be readily utilized as a basis for modifying or designing other structures for carrying out the same purposes of the present disclosure. It should also be realized by those skilled in the art that such equivalent constructions do not depart from the scope of the disclosure as set forth in the appended claims. The novel features which are believed to be characteristic of the disclosure, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present disclosure.

Embodiments of the present disclosure relate to optimization of query execution plans. A plan creation request is received to create a query execution plan for usage in executing queries inputted by a user. The plan creation request is received along with a query. Each time a new query is inputted, a query execution plan is generated. A query execution plan is a latest plan among the one or more query execution plans which is recently generated for optimizing the execution of the query. Particularly, the one or more query execution plans are created one after the other for optimizing the execution of the query. Thus, a query execution plan which is recently used is considered to be the latest plan among the one or more query execution plans. The optimization is performed using a query statement, a planning time and an execution time. The planning time refers to a time required to plan the optimization of the query execution plan. The execution time refers to a time required to execute the optimized query execution plan. The optimization of the query execution plan is iterated to create an optimized query execution plan until the planning time and/or the execution time is satisfied. In this way, a best optimized query execution plan is created to optimize the execution of the query.

Henceforth, embodiments of the present disclosure are explained with the help of exemplary diagrams and one or more examples. However, such exemplary diagrams and examples are provided for the illustration purpose for better understanding of the present disclosure and should not be construed as limitation on scope of the present disclosure.

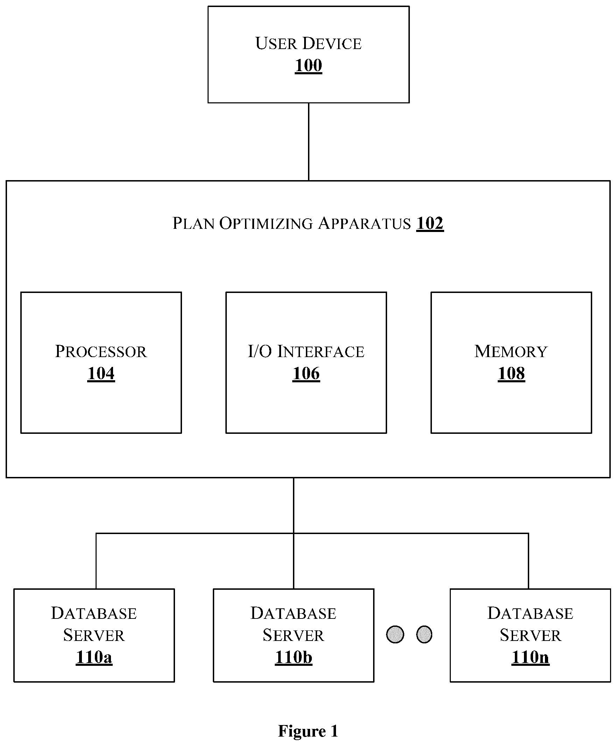

**Figure 1** shows an exemplary block diagram illustrating a plan optimizing apparatus **102** with a processor **104** and a memory **108** in accordance with some embodiments of the present disclosure.

The plan optimizing apparatus **102** is configured to optimize query execution plans. In an embodiment, the plan optimizing apparatus **102** is communicatively connected to a user device **100** and one or more database servers **110a, 110b,..., 110n** (collectively referred to **110**). In one implementation, the user device **100** may be implemented in a variety of computing systems, such as a laptop computer, a desktop computer, a notebook, a workstation, a mainframe computer, a server, a network server, and the like. The user device **100** can be used by a user which may include a person or device itself capable performing such actions performed by the user. The user includes, but is not limited to, an administrator, a developer, a tester, a manager, an editor, an Information Technology (IT) personnel, Business Intelligence (BI) specialists, data scientists etc. In an embodiment, the user device **100** enables the user to input one or more queries, and one or more optimization parameters. The user device **100** comprises a user interface (not shown) to display results of execution of a query execution plan for a query of the one or more queries. The user can input the one or more queries, and the one or more optimization parameters through the user interface. Additionally, the user interface displays iterations of optimization of a query execution plan to create an optimized query execution plan. **Figure 1** shows only one user device **100** for illustration purpose. However, a person skilled in the art would understand that there can be 'n' number of user devices connected to the plan optimizing apparatus **102**.

The one or more database servers **110** are associated to one or more databases which are used for providing query results in response to the one or more queries received from the user device **100**. In an exemplary embodiment, the one or more databases include, but are not limited to, a Relational Database Management System (RDBMS) database, a Structured Query Language (SQL) based database and Not Only SQL (NoSQL) database. In an embodiment, the one or more databases are used for fetching the query results using an executor (not shown) of the one or more database servers **110**.

The plan optimizing apparatus **102** may include at least one central processing unit ("CPU" or "processor") **104**, an input/output (I/O) interface **106**, and a memory **108**. In an embodiment, the I/O interface **106** is an interface through which one or more input data and output data is received and provided respectively. The I/O interface **106** is configured to receive the one or more queries from the user device **100**. The I/O interface **106** is configured to provide a result of the execution of the query execution plan towards executing the query for display. The I/O interface **106** is configured to provide the query results or query data fetched from the one or more database to the user device **100**. Further, the I/O interface **106** is configured to receive the one or more optimizing parameters from the user device **100** or from the plan optimizing apparatus **102** itself. The result of iteration of optimization of the query execution plan along with the optimized query execution plan is provided for display to the user device **100** through the I/O interface **106**. In an embodiment, the result of the execution of the query execution plan, the optimized query execution plan and the result of iteration of optimization of the query execution plan can be provided for display to a user interface associated to the plan optimizing apparatus **102**. In an embodiment, the I/O interface **106** is coupled to the processor **104**.

The processor **104** may comprise at least one data processor for executing program components for executing user- or device-generated queries and optimizing parameters. The processor **104** is configured to execute the one or more queries received through the I/O interface **106**. In an embodiment, the processor **104** is configured for executing the query using the query execution plan and fetching the query results from the one or more databases through the one or more database servers **110**. The processor **104** is configured to generate the query execution plan based on the plan creation request. The processor **104** is further configured to optimize the query execution plan called as latest plan which is recently been generated among the one or more query execution plans. In particular, the processor **104** is configured to optimize the query execution plan i.e. the latest plan using the one or more optimizing parameters. The processor **104** is configured to iterate the optimization of the query execution plan till the one or more optimizing parameters is satisfied. In one implementation, more than one query execution plan can be optimized by the processor **104**. In an embodiment, the processor **104** performs the optimization by using one or more data and implementing and executing one or more modules.

The memory **108** is communicatively coupled to the processor **104**. The memory **108** stores processor-executable instructions which on execution cause the processor **104** to perform the optimization of the query execution plan i.e. the latest plan. The memory **108** stores the one or more query execution plans created by the processor **104**. The memory **108** stores the optimized query execution plan as a latest plan i.e. a next latest plan for executing the one or more queries. Further, the memory **108** stores the one or more data and the one or more modules which are explained in detail in following description of the present disclosure.

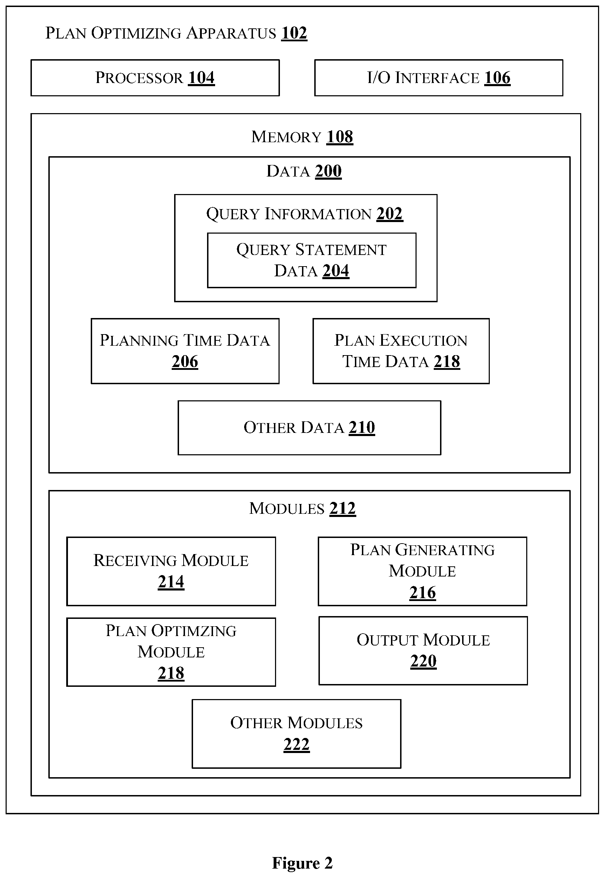

**Figure 2** shows exemplary block diagram illustrating the plan optimizing apparatus **102** with the one or more data **200** and the one or more modules **212** for optimizing the query execution plan in accordance with some embodiments of the present disclosure.

In an embodiment, the one or more data **200** may include, for example, query information **202,** query statement data **204,** planning time data **206,** plan execution time data **208** and other data **210** received from the user device **100** for optimizing the query execution plan.

The query information **202** comprises details of a query and a query statement which are received when the query is received from the user device **100**. The query information **202** may comprise the plan creation request including a query and a query statement data **204** for creating the query execution plan for the query. For example, consider the user raise a query 'Q'. Upon the raising the query 'Q' by the user device **100,** the plan creation request for creating the query execution plan for the query 'Q' is received by the plan optimizing apparatus **102**. In an embodiment, the plan creation request comprises a query for example 'Q' and a query statement defining the query 'Q'. For example, the processor **104** creates a query execution plan 'P1' for the query 'Q' based on the plan creation request. An example of the query statement standard for six table join is as below:

*SELECT n_name, sum (l_extendedprice \* (1 - l_discount)) as revenue*

*FROM*

*customer, orders, lineitem, supplier, nation, region*

*where*

*c_custkey = o_custkey and l_orderkey = o_orderkey and l_suppkey = s_suppkey*

*and c_nationkey = s_nationkey and s_nationkey = n_nationkey and n_regionkey = r_regionkey*

*and r_name = 'abc'/\*':1'\*/ and o_orderdate >= timenow() and o_orderdate < timenow () + interval '1 year'*

*group by n_name order by revenue desc;*

In an embodiment, the plan creation request may also comprise a plan time and an execution time. The plan time refers to time for planning or creating an optimized query execution plan for the query 'Q' or time required to plan the optimization of the query execution plan. The execution time refers to time for executing the optimized query execution plan for executing the query 'Q'. In an embodiment, the query execution 'P1' is considered to be a latest plan or suboptimal plan among the one or more query execution plans. The one or more query execution plans were created one after the other for optimizing the execution of the query 'Q'. The query execution plan 'P1' is the latest plan or suboptimal plan. In an embodiment, the query execution plan can be created using only the query and the query statement. The usage of the plan time and the execution time for creating the query execution plan are optional.

The data **200** comprises optimizing parameters data (not shown) which are used as the one or more optimizing parameters for optimizing the query execution plan. The optimizing parameters data includes the query statement data **204,** the planning time data **206** and the plan execution time data **208**. The query statement data **204** refers to the query statement of the query. For example, considering, the query execution plan 'P1' contains 100 statements of programming instructions. In view of the result of execution of the query execution plan 'P1', assuming the execution is taking duration more than a predefined time period. The predefined time period is a time period within which the execution must have been completed. For instance, predefine time period may be considered to be one hour. Particularly, with the viewing initially, the execution is taking more duration at 14th statement of the query execution plans 'P1'. Therefore, the user device **100** wants to optimize the query execution plan 'P1' from the 14th statement of the programming instructions for the query 'Q'. Hence, the user device **100** specifies the query statement as below:

$$Enhance\ Plan\ (14,30m,\ 15m)\text{---------------------------}(1)$$

The planning time data **206** refers to a time for creating or planning the optimization of the query execution plan 'P1' i.e. for creating an optimized query execution plan from 'P1' to 'P1*'. For example, the user device **100** specifies the planning time as 30 minutes for creating the optimized query execution plan as 'P1*' by optimizing the query execution plan 'P1' commencing from the 14th statement. The exemplary instruction for creating the enhanced or optimized the query execution plan 'P1*' for the query 'Q' with 30 minutes is stated as below:

$$Enhance\ Plan\ (14,\ \ 30m)\text{---------------------------}(2)$$

The optimization commencing from the 14th statement of the query execution plan 'P1' is initiated and executed till the planning time of 30 minutes expires. Further, the optimization is iterated repeatedly until the optimization results with a best execution plan as per the satisfaction of the planning time.

The plan execution time data **208** refers to a time for executing the optimized query execution plan 'P1*' for the query 'Q'. For example, the execution time is specified as 15 minutes for executing the optimized query execution plan as 'P1*'. The execution of the optimized query execution plan 'P1*' commences from the 14th statement. The exemplary instruction for executing the enhanced or optimized query execution plan 'P1*' for the query 'Q' with the plan execution time as 15 minutes is stated as below:

$$Enhance\ Plan\ (14,\ 30m,\ 15m)\text{---------------------------}(3)$$

The execution commencing from the 14th statement of the optimized query execution plan 'P1*' is initiated and executed till the plan execution time of 15 minutes expires. Further, the optimization is iterated repeatedly until the optimization results with a best execution plan as per the satisfaction of the plan execution time.

In an embodiment, the optimization can be performed until either or both of the planning time and the plan execution time expires.

The other data **210** may refer to such data which can be used for optimization of the query execution plan 'P1'.

In an embodiment, the one or more data **200** in the memory **108** are processed by the one or more modules **212** of the plan optimizing apparatus **102**. The one or more modules **212** may be stored within the memory **108** as shown in **Figure 2**. In an example, the one or more modules **212,** communicatively coupled to the processor **104,** may also be present outside the memory **108**. Particularly, the one or more data **200** in the memory **108** including the one or more optimizing parameters are used by the one or more modules **212**. As used herein, the term module refers to an application specific integrated circuit (ASIC), an electronic circuit, a processor (shared, dedicated, or group) and memory that execute one or more software or firmware programs, a combinational logic circuit, and/or other suitable components that provide the described functionality.

The one or more modules **212** may include, for example, a receiving module **214,** a plan generating module **216,** a plan optimizing module **218,** and an output module **220**. Other modules **222** to perform various miscellaneous functionalities of the optimization of the query execution plan are included in the modules **212**. It will be appreciated that such aforementioned modules may be represented as a single module or a combination of different modules.

The receiving module **212** is configured to receive the one or more queries. Below (4) shows a plan create request statement for creating the query execution plan 'P1' for the query e.g. 'Q':

$$Prepare\ (query\ stmt,\ \text{"}query\text{"},\ planning\ time,\ plan\ execution\ time)\text{-------------------}(4)$$

The plan generating module **216** is configured to generate the query execution plan 'P1' for the query 'Q'.

The plan optimizing module **218** generates an optimized query execution plan 'P1*' by iterating optimization of the query execution plan 'P1' until the optimization satisfies the one or more optimizing parameters. For example, considering, 'P1' is the query execution plan which is used as the latest plan or suboptimal plan to execute the query 'Q'. Considering, the query execution plan 'P1' contains 100 statements of programming instructions. In view of the result of execution of the query execution plan 'P1', assuming the execution is taking duration more than a predefined time period within which the execution must have been completed. Particularly, with the viewing initially, the execution is taking more duration at 14th statement of the query execution plan 'P1'. Therefore, the user wants to optimize the planning and plan execution time for executing the query 'Q' commencing from the 14th statement. Hence, the user device **100** specifies the optimizing parameters as below:

*Enhance Plan (query stmt, planning time, plan execution time)-------------------(5)*

In an embodiment, the plan optimizing apparatus **102** uses a simulated annealing technique and/or a generic technique for optimizing the query execution plan 'P1'. Thus, the optimized query execution plan 'P1*' is generated by iterating optimization of the query execution 'P1' till the planning time and/or the execution time expires or till the best plan is created.

In an embodiment, the optimized query execution plan 'P1*' is stored in the memory **108.** Particularly, the optimized query execution plan 'P1*' is stored as a latest plan in the memory **108** for executing the one or more queries in next cycle or in next execution process.

The output module **220** is configured to provide one or more output data for display. The output data includes, but is not limited to, the result of the execution of the query execution plan 'P1', the generation of the optimized query execution 'P1*' and the iterations of optimization of the query execution plan 'P1' to create the optimized query execution plan 'P1*'.

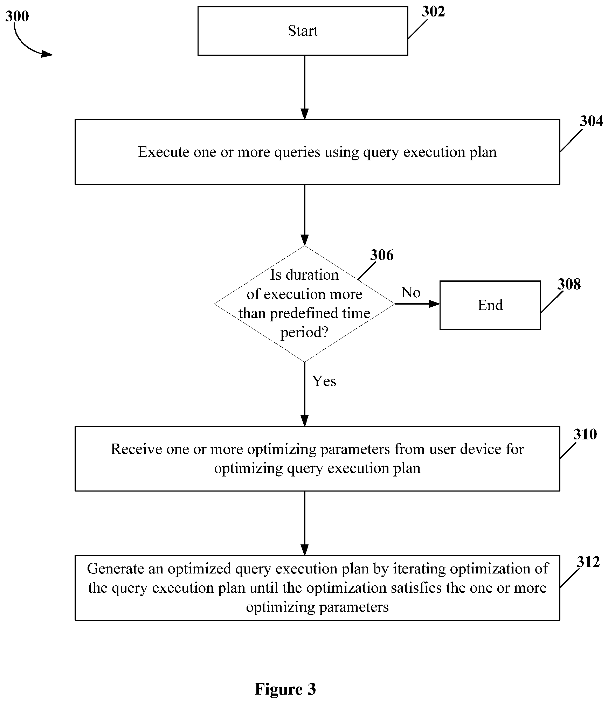

**Figure 3** illustrates a flowchart of method **300** for optimizing the query execution plan 'P1' in accordance with some embodiments of the present disclosure.

As illustrated in **Figure 3,** the method **300** comprises one or more blocks for optimizing the query execution plan. The method **300** may be described in the general context of computer executable instructions. Generally, computer executable instructions can include routines, programs, objects, components, data structures, procedures, modules, and functions, which perform particular functions or implement particular abstract data types.

The order in which the method **300** is described is not intended to be construed as a limitation, and any number of the described method blocks can be combined in any order to implement the method **300**. Additionally, individual blocks may be deleted from the method **300** without departing from the scope of the subject matter described herein. Furthermore, the method **300** can be implemented in any suitable hardware, software, firmware, or combination thereof.

At **block 302,** the process of execution of the one or more queries starts.

At **block 304,** the one or more queries received from the user device **100** is executed using the query execution plan 'P1' among the one or more query execution plans created in past. In an embodiment, the query execution plan 'P1' is created based on the plan creation request of the one or more queries. For example, let 'P1' be the query execution plan created for the query 'Q'. And let the query execution plan 'P1' be the latest query execution plan which is recently or currently in usage for executing the query 'Q'.

At **block 306,** a condition is checked whether the time taken for execution of the query execution plan is more than the predefined time period within which the execution was expected to be completed. For example, considering, the query execution plan 'P1' contains 100 statements of programming instructions. In view of the result of execution of the query execution plan 'P1', For example, assuming the execution time goes to 1 hour and 30 minutes whereas the predefined time period for the execution was expected to be 1 hour. Particularly, with the viewing initially, the execution is taking more duration at 14$^{th}$ statement of the query execution plan 'P1'. If the execution of the query execution plan is not more than the predefined time period, then the process goes to **block 308** via **'No'** where the process for optimization is not performed and the query is executed in traditional way. If the execution of the query execution plan is more than the predefined time period, then the process goes to **block 310** via **'Yes'.**

At **block 310,** the one or more optimizing parameters comprising the query statement, the planning time and the plan execution time is received from the user device **100** for optimizing a query execution plan 'P1'. For example, the one or more optimizing parameters are used on the query execution plan 'P1' for optimizing the query execution plan 'P1'. Specifically, the one or more optimizing parameters are applied to optimize the query execution plan 'P1' commencing from the 14$^{th}$ statement of the programming instructions of the query execution plan 'P1'.

At **block 312,** the optimized query execution plan 'P1*' is generated by iterating optimization of the query execution plan 'P1' until the optimization satisfies the one or more optimizing parameters. The iteration is initiated commencing where the condition of execution is checked. For example, the iteration is initiated commencing from the 14$^{th}$ statement of the programming instructions of the query execution plan 'P1'. In an embodiment, the iteration is performed until the best execution plan is generated. In an embodiment, the iteration is performed until the planning time and/or the plan execution time expires.

Computer System

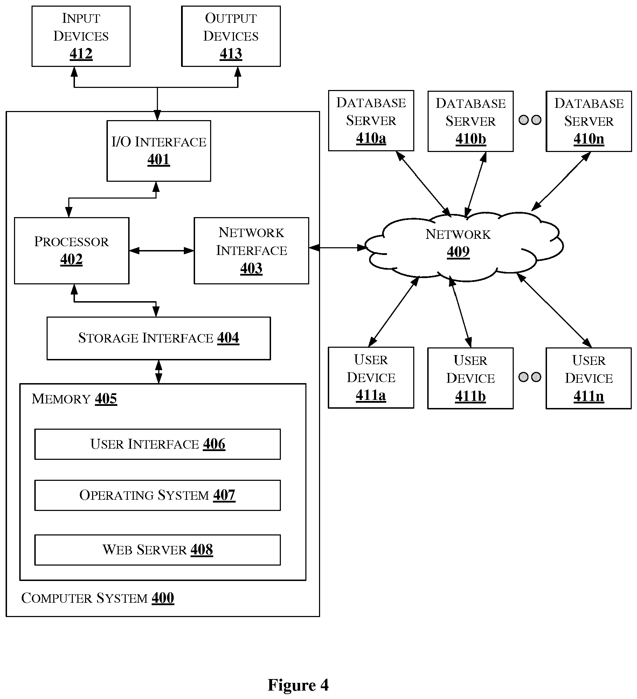

**Figure 4** illustrates a block diagram of an exemplary computer system **400** for implementing embodiments consistent with the present disclosure. In an embodiment, the computer system **400** is used to implement the plan optimizing apparatus **102**. The computer system **400** may comprise a central processing unit ("CPU" or "processor") **402.** The processor **402** may comprise at least one data processor for executing program components for generating an optimized query execution plan. The processor **402** may include specialized processing units such as integrated system (bus) controllers, memory management control units, floating point units, graphics processing units, digital signal processing units, etc.

The processor **402** may be disposed in communication with one or more input/output (I/O) devices (**412** and **413**) via I/O interface **401**. The I/O interface **401** may employ communication protocols/methods such as, without limitation, audio, analog, digital, monoaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like), etc.

The I/O interface(s) **401** may include a variety of software and hardware interfaces, for example, a web interface, a graphical user interface, etc. Using the I/O interface **401,** the computer system **400** may communicate with one or more I/O devices (**412** and **413**). For example, the input device **412** may be an antenna, keyboard, mouse, joystick, (infrared) remote control, camera, card reader, fax machine, dongle, biometric reader, microphone, touch screen, touchpad, trackball, sensor (e.g., accelerometer, light sensor, GPS, gyroscope, proximity sensor, or the like), stylus, scanner, storage device, transceiver, video device/source, visors, etc. The output device **413** may be a printer, fax machine, video display (e.g., cathode ray tube (CRT), liquid crystal display (LCD), light-emitting diode (LED), plasma, or the like), audio speaker, etc.

In some embodiments, the processor **402** may be disposed in communication with a communication network **409** via a network interface **403**. The network interface **403** may communicate with the communication network **409.** The network interface **403** may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc. The communication network **409** may include, without limitation, a direct interconnection, local area network (LAN), wide area network (WAN), wireless network (e.g., using Wireless Application Protocol), the Internet, etc. Using the network interface **403** and the communication network **409,** the computer system **400** may communicate with one or more database servers **410** (**a,..n**) and one or more user devices **411** (**a,..,n**). The one or more database servers **410** (**a,..,n**) includes, but not limited to, relational database i.e. Relational Database Management Systems (RDBMS), a Structured Query Language (SQL) based database and the Not Only SQL (NOSQL) database. The one or more user devices **411** (**a,...,n**) may include, without limitation, personal computer(s), server(s), fax machines, printers, scanners, various mobile devices such as cellular telephones, smartphones, tablet computers, eBook readers, laptop computers, notebooks, gaming consoles, or the like. In an embodiment, one or more queries is received from the one or more user devices **411** (**a,..,n**) which may be used by various stakeholders, Information Technology (IT) administrators, business analyst, software tester, software developer or end users of an organization.

In some embodiments, the processor **402** may be disposed in communication with a memory **405** (e.g., RAM, ROM, etc. not shown in **figure 4**) via a storage interface **404**. The storage interface **404** may connect to memory **405** including, without limitation, memory drives, removable disc drives, etc., employing connection protocols such as serial advanced technology attachment (SATA), integrated drive electronics (IDE), IEEE-1394, universal serial bus (USB), fiber channel, small computer systems interface (SCSI), etc. The memory drives may further include a drum, magnetic disc drive, magneto-optical drive, optical drive, redundant array of independent discs (RAID), solid-state memory devices, solid-state drives, etc.

The memory **405** may store a collection of program or database components, including, without limitation, user interface application **406,** an operating system **407,** web server **408** etc. In some embodiments, computer system **400** may store user/application data **406,** such as the data, variables, records, etc. as described in this disclosure. Such databases may be implemented as fault-tolerant, relational, scalable, secure databases such as Oracle or Sybase.

The operating system **407** may facilitate resource management and operation of the computer system **400.** Examples of operating systems include, without limitation, Apple Macintosh OS X, Unix, Unix-like system distributions (e.g., Berkeley Software Distribution (BSD), FreeBSD, NetBSD, OpenBSD, etc.), Linux distributions (e.g., Red Hat, Ubuntu, Kubuntu, etc.), IBM OS/2, Microsoft Windows (XP, Vista/7/8, etc.), Apple iOS, Google Android, Blackberry OS, or the like. User interface **406** may facilitate display, execution, interaction, manipulation, or operation of program components through textual or graphical facilities. For example, user interfaces may provide computer interaction interface elements on a display system operatively connected to the computer system **400,** such as cursors, icons, check boxes, menus, scrollers, windows, widgets, etc. Graphical user interfaces (GUIs) may be employed, including, without limitation, Apple Macintosh operating systems' Aqua, IBM OS/2, Microsoft Windows (e.g., Aero, Metro, etc.), Unix X-Windows, web interface libraries (e.g., ActiveX, Java, Javascript, AJAX, HTML, Adobe Flash, etc.), or the like.

In some embodiments, the computer system **400** may implement a web browser **408** stored program component. The web browser **408** may be a hypertext viewing application, such as Microsoft Internet Explorer, Google Chrome, Mozilla Firefox, Apple Safari, etc. Secure web browsing may be provided using HTTPS (secure hypertext transport protocol), secure sockets layer (SSL), Transport Layer Security (TLS), etc. Web browsers may utilize facilities such as AJAX, DHTML, Adobe Flash, JavaScript, Java, application programming interfaces (APIs), etc. In some embodiments, the computer system **400** may implement a mail server stored program component. The mail server may be an Internet mail server such as Microsoft Exchange, or the like. The mail server may utilize facilities such as ASP, ActiveX, ANSI C++/C#, Microsoft .NET, CGI scripts, Java, JavaScript, PERL, PHP, Python, WebObjects, etc. The mail server may utilize communication protocols such as internet message access protocol (IMAP), messaging application programming interface (MAPI), Microsoft Exchange, post office protocol (POP), simple mail transfer protocol (SMTP), or the like. In some embodiments, the computer system **400** may implement a mail client stored program component. The mail client may be a mail viewing application, such as Apple Mail, Microsoft Entourage, Microsoft Outlook, Mozilla Thunderbird, etc.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

In one implementation, the computer system **400** is configured to communicate with the one or more databases **410** (**a,...,n**) and the one or more user devices **411** (**a,...,n**) over a network **409** through a network interface **403.** The network includes, but is not limited to, a direct interconnection, an e-commerce network, a peer to peer (P2P) network, local area network (LAN), wide area network (WAN), wireless network (e.g., using Wireless Application Protocol), the Internet, Wi-Fi and such. The network may either be a dedicated network or a shared network, which represents an association of the different types of networks that use a variety of protocols, for example, Hypertext Transfer Protocol (HTTP), Transmission Control Protocol/Internet Protocol (TCP/IP), Wireless Application Protocol (WAP), etc., to communicate with each other. Further, the network may include a variety of network devices, including routers, bridges, servers, computing devices, storage devices, etc. The network interface **403** may employ connection protocols include, but not limited to, direct connect, Ethernet (e.g., twisted pair 10/100/1000 Base T), transmission control protocol/internet protocol (TCP/IP), token ring, IEEE 802.11 a/b/g/n/x, etc.

Additionally, advantages of present disclosure are illustrated herein.

Embodiments of the present disclosure relate to managing the planning time and/or the execution time to manage execution of the one or more queries.

Embodiments of the present disclosure relate to optimizing the planning time and/or the execution time along with optimization of the query execution plan. The optimization is performed until an optimized query execution plan is generated until the planning time and/or the execution time is satisfied. In this way, the present disclosure provides a best query execution plan which can execute the queries quickly and efficiently without delay.

Embodiments of the present disclosure reduce the planning time and/or the execution time to reduce duration of the execution of the one or more queries.

The described operations may be implemented as a method, system or article of manufacture using standard programming and/or engineering techniques to produce software, firmware, hardware, or any combination thereof. The described operations may be implemented as code maintained in a "non-transitory computer readable medium", where a processor may read and execute the code from the computer readable medium. The processor is at least one of a microprocessor and a processor capable of processing and executing the queries. A non-transitory computer readable medium may comprise media such as magnetic storage medium (e.g., hard disk drives, floppy disks, tape, etc.), optical storage (CD-ROMs, DVDs, optical disks, etc.), volatile and non-volatile memory devices (e.g., EEPROMs, ROMs, PROMs, RAMs, DRAMs, SRAMs, Flash Memory, firmware, programmable logic, etc.), etc. Further, non-transitory computer-readable media comprise all computer-readable media except for a transitory. The code implementing the described operations may further be implemented in hardware logic (e.g., an integrated circuit chip, Programmable Gate Array (PGA), Application Specific Integrated Circuit (ASIC), etc.).

Still further, the code implementing the described operations may be implemented in "transmission signals", where transmission signals may propagate through space or through a transmission media, such as an optical fiber, copper wire, etc. The transmission signals in which the code or logic is encoded may further comprise a wireless signal, satellite transmission, radio waves, infrared signals, Bluetooth, etc. The transmission signals in which the code or logic is encoded is capable of being transmitted by a transmitting station and received by a receiving station, where the code or logic encoded in the transmission signal may be decoded and stored in hardware or a non-transitory computer readable medium at the receiving and transmitting stations or devices. An "article of manufacture" comprises non-transitory computer readable medium, hardware logic, and/or transmission signals in which code may be implemented. A device in which the code implementing the described embodiments of operations is encoded may comprise a computer readable medium or hardware logic. Of course, those skilled in the art will recognize that many modifications may be made to this configuration without departing from the scope of the disclosure, and that the article of manufacture may comprise suitable information bearing medium known in the art.

The terms "an embodiment", "embodiment", "embodiments", "the embodiment", "the embodiments", "one or more embodiments", "some embodiments", and "one embodiment" mean "one or more (but not all) embodiments of the disclosure(s)" unless expressly specified otherwise.

The terms "including", "comprising", "having" and variations thereof mean "including but not limited to", unless expressly specified otherwise.

The enumerated listing of items does not imply that any or all of the items are mutually exclusive, unless expressly specified otherwise.

The terms "a", "an" and "the" mean "one or more", unless expressly specified otherwise.

A description of an embodiment with several components in communication with each other does not imply that all such components are required. On the contrary a variety of optional components are described to illustrate the wide variety of possible embodiments of the disclosure.

When a single device or article is described herein, it will be readily apparent that more than one device/article (whether or not they cooperate) may be used in place of a single device/article. Similarly, where more than one device or article is described herein (whether or not they cooperate), it will be readily apparent that a single device/article may be used in place of the more than one device or article or a different number of devices/articles may be used instead of the shown number of devices or programs. The functionality and/or the features of a device may be alternatively embodied by one or more other devices which are not explicitly described as having such functionality/features. Thus, other embodiments of the disclosure need not include the device itself.

The illustrated operations of **Figure 3** show certain events occurring in a certain order. In alternative embodiments, certain operations may be performed in a different order, modified or removed. Moreover, steps may be added to the above described logic and still conform to the described embodiments. Further, operations described herein may occur sequentially or certain operations may be processed in parallel. Yet further, operations may be performed by a single processing unit or by distributed processing units.

Finally, the language used in the specification has been principally selected for readability and instructional purposes, and it may not have been selected to delineate or circumscribe the inventive subject matter. It is therefore intended that the scope of the disclosure be limited not by this detailed description, but rather by any claims that issue on an application based here on. Accordingly, the embodiments of the present disclosure are intended to be illustrative, but not limiting, of the scope of the disclosure, which is set forth in the following claims.

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

**Referral Numerals:**

| Reference Number | Description |
| --- | --- |
| 100 | User Device |
| 102 | Plan Optimizing Apparatus |
| 104 | Processor |
| 106 | I/O interface |
| 108 | Memory |
| 110a, 110b,...,110n | Database Servers |
| 200 | Data |
| 202 | Query Information |
| 204 | Query Statement Data |
| 206 | Planning Time Data |
| 208 | Plan Execution Time Data |
| 210 | Other Data |
| 212 | Modules |
| 214 | Receiving Module |
| 216 | Plan Generating Module |
| 218 | Plan Optimizing Module |
| 220 | Output Module |

(continued)

| Reference Number | Description |
|---|---|
| 222 | Other Modules |
| 400 | Computer System |
| 401 | I/O Interface |
| 402 | Processor |
| 403 | Network Interface |
| 404 | Storage Interface |
| 405 | Memory |
| 406 | User Interface |
| 407 | Operating System |
| 408 | Web Server |
| 409 | Network |
| 410 (a,...,n) | Databases |
| 411 (a,....,n) | User Devices |
| 412 | Input Devices |
| 413 | Output Devices |

## Claims

1.  A method for optimizing query execution plan, the method comprising:

    receiving, by a plan optimizing apparatus, optimizing parameters from a user device for optimizing a query execution plan, wherein the query execution plan is latest of one or more query execution plans for executing one or more queries, wherein the optimizing parameters comprise a query statement, a planning time and a plan execution time, and wherein the optimizing parameters are received when duration of execution of the one or more queries using the query execution plan is greater than a predefined time period required for executing the one or more queries, and the query statement refers to a statement of the query execution plan, wherein an execution takes more duration at the statement than other statements of the query execution plan; and
    generating, by the plan optimizing apparatus, an optimized query execution plan commencing from the query statement by iterating optimization of the query execution plan until the optimization satisfies the optimizing parameters.

2.  The method as claimed in claim 1, wherein the query execution plan is stored in a memory associated to the plan optimizing apparatus.

3.  The method as claimed in claim 2 further comprising storing by the plan optimizing apparatus, the optimized query execution plan as a latest plan in the memory of the plan optimizing apparatus for executing the one or more queries.

4.  The method as claimed in claim 1, wherein the one or more query execution plans are generated upon receiving a plan creation request from the user device.

5.  A plan optimizing apparatus for optimizing query execution plan comprising:

    a receiving module for receiving optimizing parameters from a user device for optimizing a query execution plan, wherein the query execution plan is latest of one or more query execution plans for executing one or more queries, and wherein the optimizing parameters are received when duration of execution of the one or more queries using the query execution plan is greater than a predefined time period required for executing the one or more queries, wherein the optimizing parameters comprise a query statement, a planning time and a plan execution time, the query statement refers to a statement of the query execution plan, wherein an execution takes more duration at the statement than other statements of the query execution plan; and
a plan optimizing module for generating an optimized query execution plan commencing from the query statement by iterating optimization of the query execution plan until the optimization satisfies the optimizing parameters.

6. The plan optimizing apparatus as claimed in claim 5 further comprises a memory for storing the query execution plan.

7. The plan optimizing apparatus as claimed in claim 6 further comprises an update module for storing the optimized query execution plan as a latest plan in the memory of the plan optimizing apparatus for executing the one or more queries.

8. The plan optimizing apparatus as claimed in claim 5 further comprises a plan generating module for generating the one or more query execution plans upon receiving a plan creation request from the user device.

9. The plan optimizing apparatus as claimed in claim 8, wherein the plan creation request comprises at least one of a query statement, a query and the one or more optimizing parameters.

10. A non-transitory computer readable medium including operations stored thereon that when processed by at least one processing unit cause a plan optimizing apparatus to perform one or more actions by performing the method of any of claims 1 to 4.

11. A computer program comprising instructions which, when executed by a computer, cause a plan optimizing apparatus to perform the method of any of claims 1 to 4.

**Patentansprüche**

1. Verfahren zum Optimieren eines Abfrage-Ausführungsplans, wobei das Verfahren Folgendes umfasst:

   Empfangen von Optimierungsparametern durch einen Planoptimierungs-Apparat von einem Benutzergerät zum Optimieren eines Abfrage-Ausführungsplans, wobei der Abfrage-Ausführungsplan der aktuellste von einem oder mehreren Abfrage-Ausführungsplänen zum Ausführen einer oder mehrerer Abfragen ist, wobei die Optimierungsparameter eine Abfragenangabe, eine Planungszeit und eine Planausführungszeit umfassen, und wobei die Optimierungsparameter empfangen werden, wenn die Dauer der Ausführung der einen oder der mehreren Abfragen mithilfe des Abfrage-Ausführungsplans größer als ein vordefinierter Zeitraum ist, der zum Ausführen der einen oder der mehreren Abfragen erforderlich ist, und sich die Abfragenangabe auf eine Angabe des Abfrage-Ausführungsplans bezieht, wobei eine Ausführung bei der Angabe länger dauert als bei anderen Angaben des Abfrage-Ausführungsplans; und
   Erzeugen eines optimierten Abfrage-Ausführungsplans durch den Planoptimierungs-Apparat, beginnend mit der Abfragenangabe, über mehrfache Optimierung des Abfrage-Ausführungsplans, bis die Optimierung die Optimierungsparameter erfüllt.

2. Verfahren nach Anspruch 1, wobei der Abfrage-Ausführungsplan in einem Speicher gespeichert wird, der dem Planoptimierungs-Apparat zugeordnet ist.

3. Verfahren nach Anspruch 2, ferner umfassend das Speichern des optimierten Abfrage-Ausführungsplans durch den Planoptimierungs-Apparat als aktuellsten Plan im Speicher des Planoptimierungs-Apparats zum Ausführen der einen oder mehreren Abfragen.

4. Verfahren nach Anspruch 1, wobei der eine oder die mehreren Abfrage.Ausführungspläne erzeugt werden, sobald eine Planerstellungsanfrage vom Benutzergerät empfangen wird.

5. Planoptimierungs-Apparat zum Optimieren eines Abfrage-Ausführungsplans, Folgendes umfassend:

   ein Empfangsmodul zum Empfangen von Optimierungsparametern von einem Benutzergerät zum Optimieren eines Abfrage-Ausführungsplans, wobei der Abfrage-Ausführungsplan der aktuellste von einem oder mehreren Abfrage-Ausführungsplänen zum Ausführen einer oder mehrerer Abfragen ist, und wobei die Optimierungsparameter empfangen werden, wenn die Dauer der Ausführung der einen oder der mehreren Abfragen mithilfe des Abfrage-Ausführungsplans größer als ein vordefinierter Zeitraum ist, der zum Ausführen der einen oder der mehreren Abfragen erforderlich ist, wobei die Optimierungsparameter eine Abfragenangabe, eine Planungszeit und eine Planausführungszeit umfassen, sich die Abfragenangabe auf eine Angabe des Abfrage-Ausführungsplans bezieht, wobei eine Ausführung bei der Angabe länger dauert als bei anderen Angaben des Abfrage-Ausführungsplans; und

ein Planoptimierungs-Modul zum Erzeugen eines optimierten Abfrage-Ausführungsplans, beginnend mit der Abfragenangabe über mehrfache Optimierung des Abfrage-Ausführungsplans, bis die Optimierung die Optimierungsparameter erfüllt.

6. Planoptimierungs-Apparat nach Anspruch 5, ferner umfassend einen Speicher zum Speichern des Abfrage-Ausführungsplans.

7. Planoptimierungs-Apparat nach Anspruch 6, ferner umfassend ein Aktualisierungsmodul zum Speichern des optimierten Abfrage-Ausführungsplans als aktuellsten Plan im Speicher des Planoptimierungs-Apparats zum Ausführen der einen oder mehreren Abfragen.

8. Planoptimierungs-Apparat nach Anspruch 5, ferner umfassend ein Planerzeugungsmodul zum Erzeugen des einen oder der mehreren Abfrage-Ausführungspläne, sobald eine Planerstellungsanfrage vom Benutzergerät empfangen wird.

9. Planoptimierungs-Apparat nach Anspruch 8, wobei die Planerstellungsanfrage mindestens eine Abfragenangabe, eine Abfrage und einen oder mehrere Optimierungsparameter umfasst.

10. Nicht-flüchtiges computerlesbares Medium, einschließlich darauf gespeicherten Vorgängen, das, wenn es von mindestens einer Verarbeitungseinheit ausgeführt wird, dazu führt, dass ein Planoptimierungs-Apparat eine oder mehrere Maßnahmen durch Durchführen des Verfahrens nach einem der Ansprüche 1 bis 4 durchführt.

11. Computerprogramm, das Anweisungen umfasst, die, wenn sie von einem Computer ausgeführt werden, dazu führen, dass ein Planoptimierungs-Apparat das Verfahren nach einem der Ansprüche 1 bis 4 durchführt.


**Revendications**

1. Procédé d'optimisation du plan d'exécution de requête, le procédé comprenant :

la réception, par un appareil d'optimisation de plan, de paramètres d'optimisation provenant d'un dispositif utilisateur destiné à optimiser un plan d'exécution de requête, dans lequel le plan d'exécution de requête est le dernier d'au moins un plan d'exécution de requête destiné à exécuter au moins une requête, dans lequel les paramètres d'optimisation comprennent une instruction de requête, un temps de planification et un temps d'exécution de plan, et dans lequel les paramètres d'optimisation sont reçus lorsque la durée d'exécution d'au moins une requête à l'aide du plan d'exécution de requête est supérieure à une période prédéfinie requise pour exécuter l'au moins une requête, et l'instruction de requête renvoie à une instruction du plan d'exécution de requête, dans lequel une exécution prend plus de temps au niveau de l'instruction que les autres instructions du plan d'exécution de requête ; et

la génération, par l'appareil d'optimisation de plan, d'un plan d'exécution de requête optimisé à partir de l'instruction de requête par l'itération de l'optimisation du plan d'exécution de requête, jusqu'à ce que l'optimisation satisfasse les paramètres d'optimisation.

2. Procédé selon la revendication 1, dans lequel le plan d'exécution de requête est enregistré dans une mémoire associée à l'appareil d'optimisation de plan.

3. Procédé selon la revendication 2, comprenant en outre l'enregistrement par l'appareil d'optimisation de plan, du plan d'exécution de requête optimisé comme dernier plan dans la mémoire de l'appareil d'optimisation de plan pour exécuter l'au moins une requête.

4. Procédé selon la revendication 1, dans lequel l'au moins un plan d'exécution d'une requête est généré lors de la réception d'une demande de création de plan du dispositif utilisateur.

**5.** Appareil d'optimisation de plan destiné à optimiser le plan d'exécution de requête, comprenant :

un module de réception destiné à recevoir des paramètres d'optimisation d'un dispositif utilisateur pour optimiser un plan d'exécution de requête, dans lequel le plan d'exécution de requête est le dernier d'au moins un plan d'exécution de requête pour exécuter au moins une requête, et dans lequel les paramètres d'optimisation sont reçus lorsque la durée d'exécution de l'au moins une requête à l'aide du plan d'exécution de requête est supérieure à une période prédéfinie requise pour exécuter au moins une requête, dans lequel les paramètres d'optimisation comprennent une instruction de requête, un temps de planification et un temps d'exécution de plan, l'instruction de requête renvoie à une instruction du plan d'exécution de requête, dans lequel une exécution prend plus de temps au niveau de l'instruction que les autres instructions du plan d'exécution de requête ; et un module d'optimisation de plan destiné à générer un plan d'exécution de requête optimisé à partir de l'instruction de requête par l'itération de l'optimisation du plan d'exécution de requête, jusqu'à ce que l'optimisation satisfasse les paramètres d'optimisation.

**6.** Appareil d'optimisation de plan selon la revendication 5, comprenant en outre une mémoire destinée à enregistrer le plan d'exécution de requête.

**7.** Appareil d'optimisation de plan selon la revendication 6, comprenant en outre un module de mise à jour destiné à enregistrer le plan d'exécution de requête optimisé comme dernier plan dans la mémoire de l'appareil d'optimisation de plan pour exécuter l'au moins une requête.

**8.** Appareil d'optimisation de plan selon la revendication 5, comprenant en outre un module de génération de plan destiné à générer l'au moins un plan d'exécution de requête lors de la réception d'une demande de création de plan à partir du dispositif utilisateur.

**9.** Appareil d'optimisation de plan selon la revendication 8, dans lequel la demande de création de plan comprend une instruction de requête, et/ou une requête et/ou l'au moins un paramètre d'optimisation.

**10.** Support non transitoire lisible par ordinateur, comprenant des opérations stockées sur celui-ci, qui, lorsqu'elles sont traitées par au moins une unité de traitement, amènent un appareil d'optimisation de plan à effectuer au moins une action par l'exécution du procédé selon l'une quelconque des revendications 1 à 4.

**11.** Programme informatique comprenant des instructions qui, lorsqu'elles sont exécutées par un ordinateur, amènent un appareil d'optimisation de plan à exécuter le procédé selon l'une quelconque des revendications 1 à 4.

USER DEVICE
**100**

PLAN OPTIMIZING APPARATUS **102**

PROCESSOR
**104**

I/O INTERFACE
**106**

MEMORY
**108**

DATABASE
SERVER
**110a**

DATABASE
SERVER
**110b**

DATABASE
SERVER
**110n**

**Figure 1**

PLAN OPTIMIZING APPARATUS **102**

| PROCESSOR **104** | I/O INTERFACE **106** |

MEMORY **108**

DATA **200**

QUERY INFORMATION **202**

QUERY STATEMENT
DATA **204**

| PLANNING TIME DATA **206** | PLAN EXECUTION TIME DATA **218** |

OTHER DATA **210**

MODULES **212**

| RECEIVING MODULE **214** | PLAN GENERATING MODULE **216** |

| PLAN OPTIMZING MODULE **218** | OUTPUT MODULE **220** |

OTHER MODULES **222**

**Figure 2**

*300*

| 302 |
| --- |
| Start |

Execute one or more queries using query execution plan     304

Is duration of execution more than predefined time period?   306

No → | End |  308

Yes

Receive one or more optimizing parameters from user device for optimizing query execution plan   310

Generate an optimized query execution plan by iterating optimization of the query execution plan until the optimization satisfies the one or more optimizing parameters   312

**Figure 3**

**Figure 4**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004158551 A1
- US 2008104014 A1
- US 6707724 B1
- US 2005060285 A1